# EUROPEAN PATENT APPLICATION

(11) **EP 3 915 947 A1**
(43) Date of publication of application: **01.12.2021**
(21) Application number: 21174372.9
(22) Date of filing: 18.05.2021
(51) Int. Cl.: C02F 1/00, B01D 63/08, C02F 3/06, C02F 103/20, C02F 103/22

(54) **FILTRATION DEVICE FOR WASTEWATER TREATMENT**

(30) Priority: 28.05.2020 CZ 202037590 U
(71) Applicant: Technicka univerzita v Liberci, 460 01 Liberec (CZ)
(72) Inventor: Hruza, Jakub, 463 43 Svetla pod Jestedem (CZ); Maryska, Jiri, 468 33 Jenisovice (CZ); Busek, Jiri, 460 15 Liberec, Liberec XV-Stary Harcov (CZ)
(74) Representative: Musil, Dobroslav

(57) **Abstract**

The invention relates to a filtration device for the treatment of wastewater contaminated in particular with blood, fats, whey, sludge and/or other substances within smaller farms or abattoirs The filtration device comprises a lower vessel (2), followed in the upper part by an upper vessel (1) of a smaller diameter, wherein in the lower vessel (2) plate filters (8) are arranged comprising filter plates (80) coated on both sides with filter membranes (81) which are from the inflow side surrounded with contaminated water (13), wherein a drainage system (800) is formed on the surface of the filter plates (80) below the filter membrane (81) to drain the filtered water (131) into a collecting vessel (7).

## Description

### Technical field

The invention relates to a filtration device for the treatment of wastewater contaminated especially with blood, fats, whey, sludge and/or other substances within smaller farms or abattoirs.

### Background art

Nowadays, wastewater from smaller farms and abattoirs is treated in the following ways:
1) rough pre-cleaning using screens and sieves
2) grease trap or settling tank
3) pH adjustment
4) discharging wastewater to municipal wastewater treatment plants (WWTP) or using their own WWTP or using sequential bacterial reactors (SBR) to reduce especially COD (chemical oxygen demand), or nitrogen and phosphorus.

The usual solution is discharging pre-cleaned water (rough pre-cleaning, fat removal, pH adjustment) to WWTP. This procedure has the following drawbacks:
a) The presence of blood in abattoir wastewater and a mixture of surfactants and fat overloads the capacity of the treatment plant and increases water and sewer rates.
b) In the event of any accident, there is a risk of damage to the entire treatment plant, especially its bacterial composition. The use of sequential bacterial reactors (SBR) suitably solves the reduction of the above-mentioned pollutants and in general the reduction of chemical oxygen demand (COD). However, the disadvantage is the fact that the water leaving the treatment plant is bacterially contaminated and cannot be further utilized.

Commercially available membrane technologies can be used to obtain technical water suitable for watering, rinsing, etc. One of the disadvantages of membranes that are not made up of nanofibers is their sensitivity to drying or freezing. This can be a problem in plants where the wastewater flow is not stable over time.

CZ UV 31410 discloses a filter membrane for liquid filtration comprising a porous polymer nanofiber layer deposited by means of a discontinuous layer of hot melt binder on a carrier. The polymer nanofiber layer has a thickness of 20 micrometres, its pores have a diameter of up to 2 micrometres and its polymeric nanofibers have an oval cross-section with a ratio of the smallest to largest fiber diameter of 1:1.2 to 1:3, preferably 1:1.3 to 1:1.6, whereby the polymer nanofiber layer is arranged as an inflow filter layer. The polymer nanofiber layer is formed by modifying a standard polymer nanofiber layer by applying elevated pressure and temperature.

The object of the invention is to provide a filtration device capable of reducing COD, suspended solids and bacteria so that filtered water can be used for technical purposes, for example for watering.

### Principle of the invention

The object of the invention is achieved by a filtration device for wastewater treatment whose principle consists in that comprises a lower vessel to which an upper vessel of a smaller diameter is connected in the upper part, wherein in the lower vessel, plate filters are arranged comprising filter plates coated on both sides with filter membranes which are surrounded on the inflow side by contaminated water, a drainage system for draining the filtered water into a collecting vessel being formed on the surface of the filter plates below the filter membrane.

An air bubble generator for cleaning filter membranes is arranged in the lower part of the lower vessel below the plate filters. The air bubble generator is coupled to an air blower, whereby below the generator, a space is formed for settling the sludge, which is provided in the lower part with a valve for discharging the sludge. The introduction of air bubbles to the surfaces of the filter membranes not only releases the sludge on the surfaces of the filter membranes, but it also aids the aerobic bacterial decomposition of the sludge by aerating the water.

To ensure a supply of contaminated without swinging water, the inlet of this water is arranged in the upper part of the lower vessel.

The drainage systems of the filter plates are interconnected by a collector of filtered water, which is connected to a collecting vessel via a solenoid valve, wherein the collector of filtered water is also connected to the collecting vessel via a flushing pump, which makes it possible to supply the filtered water to the plate filters in the opposite direction after closing the solenoid valve and starting the flushing pump and thus to flush the filter membranes.

In a preferred embodiment, the filter membrane comprises in the direction from the inflow side of a thermo-mechanically treated nanofiber layer, under which a binder layer is arranged, under which a carrier layer is arranged, all three layers being interconnected into one indivisible unit.

The nanofiber layer has a basis weight of 1 - 4 g/m², a diameter of the nanofibers of 100 to 200 nm and a mean pore size between the nanofibers of less than 1 µm.

### Description of the drawings

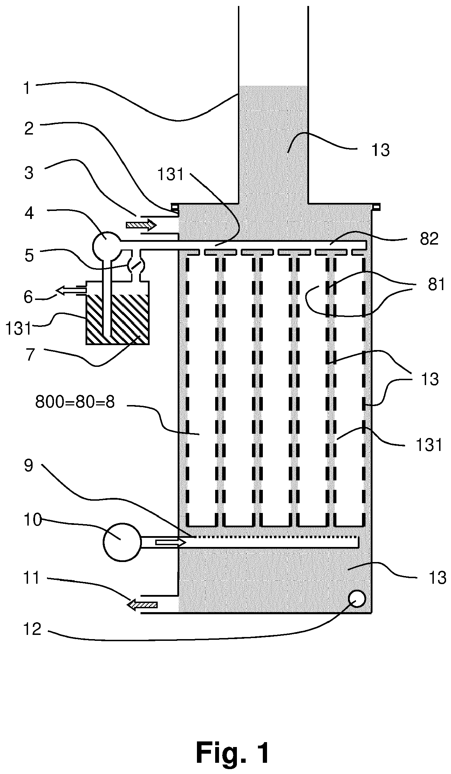

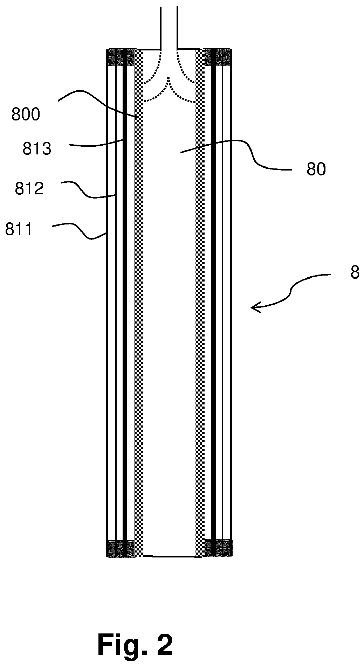

The filtration device will be explained with reference to enclosed drawings, wherein Fig. 1 shows a section of a filtration device and Fig. 2 shows a section of a plate filter.

### Examples of embodiment

The filtration device according to the present invention comprises a lower vessel **2** to which an upper vessel **1** is connected in the upper part. In the upper part of the lower vessel **2** opens an inflow **3** of contaminated water **13** to which a known dosing pump (not shown) is preceded. In the lower vessel **2** are arranged plate filters **8** consisting of filter plates **80** which are coated with a filter membrane **81** which contains a support textile layer made, for example, of spun bond and a layer of nanofibers attached to the inflow side of the filter membrane **81**. From the inflow side on which the filter membrane **81** is arranged, the plate filters **8** are surrounded with contaminated water **13** which is to be filtered. A drainage system **800** is formed on the surface of the filter plates **80** below the filter membrane **81** through which the filtered water **131** flows. The drainage systems **800** of the individual filter plates **80** are interconnected by a collector **82** of filtered water **131** which is connected via a solenoid valve **5** to a collecting vessel **7** of filtered water **131** which is provided with an overflow **6** through which the filtered water **131** flows out. The collector **82** and the collecting vessel **7** are interconnected also through a flushing pump **4.**

The lower vessel **2** has a height ranging from 1.2 to 1.7 m, whereby the height of the vessel ensures that optimal hydrostatic pressure is achieved. In the lower vessel **2,** 10 to 15 plate filters **8** are disposed, spaced 0.5 to 1.5 cm apart and located 0.2 to 0.5 m from the bottom of the lower vessel **2.**

The upper vessel **1** has a height in the range of 0.8 to 1.5 m. The other dimensions of the upper vessel **1** are reduced so that, when the desired hydrostatic height of the contaminated water level **13** is reached, the total volume of water in the upper vessel **1** is 10 to 1000 I, the aim being to reduce the weight of the device. A suitable solution is, for example, a pipe having a diameter in the range of 12 to 30 cm.

An air bubble generator **9** is arranged in the lower part of the lower vessel **2** under the filter plates **80.** The air bubble generator **9** is coupled to an air blower **10.** Near the bottom of the lower vessel **2,** a valve **11** for discharging sludge and a pressure sensor **12** for sensing the height of the contaminated water **13** are arranged.

The contaminated water **13** is fed by the dosing pump into the lower vessel **2** and the upper vessel **1** by the inflow **3** of contaminated water **13.** The dosing pump is switched off when the predetermined upper limit of the contaminated water **13** level sensed by the pressure sensor **12** is reached. Due to the achieved hydrostatic pressure, the contaminated water **13** flows through the filter plates **80** with the filter membranes **81,** whereby the impurities contained in it are captured on the filter membranes **81** and the drainage system **800** of the filter plates **80** receives only the filtered water **131** which is discharged through **collector 82** of filtered water **131** and the solenoid valve **5** into the collecting vessel **7,** from where it flows out through the overflow **6.** The dosing pump of contaminated water **13** is switched on again when the predetermined lower limit of the contaminated water **13** level is exceeded. By setting the upper and lower limits of the level of the contaminated water **13,** the hydraulic pressure acting on the filter plates **8** and the frequency of the switching the dosing pump of contaminated water **13** on and off can be defined.

Impurities captured on the filter membranes **81** are removed at selected time intervals by rinsing with air bubbles which are generated by the air bubble generator **9.** The setting of the switching on and off of the air blower **10,** which pushes the air into the air bubble generator **9,** can be solved by a timer or can be connected to the function of the dosing pump **131** of contaminated water. The generated air bubbles serve to regenerate the filter membranes **81** and at the same time aerate the water and thus allow aerobic bacterial decomposition. The space under the filter plates **80** and under the air bubble generator **9** serves to settle the thickened sludge, which is periodically removed by the valve **11.**

If a more thorough cleaning of the filter membranes **81** is required, this is performed by backflowing the filtered water **131.** Usually, after a certain period of time, the solenoid valve **5** closes and the flushing pump **4** begins to pump the filtered water **131** from the collecting vessel **7** back to the space of the filter plates **80** and their filter membranes **81,** through which the filtered water permeates and, as a result, expels impurities from them. Thus, the filter membranes **81** are backflushed and regenerated.

The filter plates **80** of the plate filters **8** are made of a polymeric material, for example polypropylene, polyester, acrylonitrile butadiene styrene, etc., and are used for mechanical fixation of the filter membranes **81** which are mounted on both sides and are made of a polymeric material which resists the action of slightly acidic and slightly alkaline environments within the range of pH 4 - 11, for example polyacrylonitrile or polyvinylidene fluoride. The membranes are designed for low pressure operation at a pressure drop of 1 to 20 kPa. Below the filter membranes **81,** grooves are formed on the filter plates **80.** The grooves form a drainage system **800** for discharging the purified filtered water **131** to the outlet opening of the plate filter **8** through which the purified filtered water **131** enters the collector **82** of the filtered water **131.**

An example of use is the treatment of wastewater from abattoirs, which contains residual blood and dispersed fat. At first, coarse fat particles and solid impurities are removed from the wastewater which is then fed in the manner described above to the lower vessel **2** to the plate filters **8** whose filter membranes **81** in the direction from the inflow side comprise a thermo-mechanically treated nanofiber layer **811** made of polyacrylonitrile nanofibers, below which a binder layer **812** made of copolyester binder fibers is arranged, below which is arranged a support layer **813** made of spunbond base fabric, such as polyester or polypropylene. All the three layers are interconnected into one indivisible unit and thermally welded to the respective filter plate **81** on both its sides.

The material of the nanofiber layer **811** has a basis weight of 1-4 g/m², a diameter of the nanofibers of 100 to 200 nm and a mean pore size between the nanofibers of less than 1 µm.

The intensity of flow through the filter membrane **81** ranges from 0.5 to 2 l/min/m² and the size of the captured particles is from 0.5 µm upwards. The service life of the filter membrane **81** is assumed to be 1 to 2 years. The operating pressure drop on the filter membrane **81** is 10 to 20 kPa and the maximum pressure in counter-current cleaning is 50 kPa.

With the dimensions of the filter plates 0.4 x 1 m, the filter area of one filter membrane **81** is approximately 0.7 m². One filtration device equipped with 15 filter plates **80** can filter 5-20 l/min of contaminated water. During the control test of the filtration in the real environment, the air bubble generator **9** was cyclically started in the mode: 1 minute operation, 1 minute pause.

The COD reduction efficiency of 87 %, sludge filtration efficiency of 95 %, flow intensity of 0.6 l/min/m² were measured.

### Industrial applicability

The filtration device according to the present invention can be used for the treatment of wastewater generated in meat and milk processing, that is of wastewater contaminated with fats, blood, whey, sludge and other substances within smaller farms or abattoirs. The treated water can be used as technical water for watering, rinsing, diluting water flowing into a biological treatment plant, etc.

### List of references

- 1: upper vessel
- 2: lower vessel
- 3: inflow of contaminated liquid
- 4: flushing pump
- 5: solenoid valve
- 6: overflow
- 7: collecting vessel of clean liquid
- 8: plate filter
- 80: filtration plate
- 800: drainage system of the filtration plate
- 81: filter membrane
- 811: nanofiber layer of the filter membrane
- 812: binder layer of the filter membrane
- 813: support layer of the filter membrane
- 82: collector of filtered water
- 9: air bubble generator
- 10: air blower
- 11: valve for discharging sludge
- 12: pressure sensor - sensing the height of the water level
- 13: contaminated water
- 131: filtered water

## Claims

1. A filtration device for the treatment of wastewater contaminated in particular with blood, fats, whey, sludge and/or other substances within smaller farms or abattoirs, **characterized in that** it comprises a lower vessel (2), followed in the upper part by an upper vessel (1) of a smaller diameter, whereby in the lower vessel (2), plate filters (8) are arranged comprising filter plates (80) coated on both sides with filter membranes (81) which are surrounded with contaminated water (13) from the inflow side, wherein a drainage system (800) is formed on the surface of the filter plates (80) below the filter membrane (81) to drain the filtered water (131) into a collecting vessel (7).

2. The filtration device according to claim 1, **characterized in that** in the lower part of the lower vessel (2), below the plate filters (8), is arranged an air bubble generator (9) coupled to an air blower (10), wherein below the generator (9), a sludge settling space is formed, which is provided in the lower part with a valve (11) for discharging the sludge.

3. The filtration device according to claim 1 or 2, **characterized in that** an inflow (3) of contaminated water is arranged in the upper part of the lower vessel (2).

4. The filtration device according to any of the preceding claims, **characterized in that** the drainage systems (800) of the filter plates (80) are interconnected by a collector (82) of filtered water (131) which is connected to a collecting vessel (7) via a solenoid valve (5), the collector (82) being connected to the collecting vessel (7) also via a flushing pump (4).

5. The filtration device according to any of the preceding claims, **characterized in that** the filter membrane (81) in the direction from the inflow side comprises a thermo-mechanically modified nanofiber layer (811) under which a binder layer (812) is arranged, under which a carrier layer (813) is arranged, all three layers being interconnected into one indivisible whole.

6. The filtration device according to claim 5, **characterized in that** the nanofiber layer (811) has a basis weight of 1 - 4 g/m², a diameter of the nanofibers of 100 to 200 nm and a mean pore size between the nanofibers of less than 1 µm.
